# FASCICULE DE BREVET EUROPEEN

(11) **EP 2 695 372 B1**
(45) Date de publication et mention de la délivrance du brevet: **23.01.2019**
(21) Numéro de dépôt: 12713121.7
(22) Date de dépôt: 30.03.2012
(51) Int. Cl.: G06F 21/10, G06F 21/55, G06F 21/72, H04N 21/254, H04N 21/43, H04N 21/442, H04N 21/462

(54) **PROCEDE DE DETERMINATION D'UN COMPORTEMENT INHABITUEL D'UN APPAREIL ELECTRONIQUE, ET APPAREIL ELECTRONIQUE APTE A METTRE EN OEUVRE UN TEL PROCEDE**
VERFAHREN ZUR BESTIMMUNG EINES UNGEWÖHNLICHEN VERHALTENS EINER ELEKTRONISCHEN VORRICHTUNG UND ELEKTRONISCHE VORRICHTUNG ZUR IMPLEMENTIERUNG EINES SOLCHEN VERFAHRENS
METHOD OF DETERMINING AN UNUSUAL BEHAVIOUR OF AN ELECTRONIC APPARATUS, AND ELECTRONIC APPARATUS ABLE TO IMPLEMENT SUCH A METHOD

(30) Priorité: 04.04.2011 FR 1152890
(43) Date de publication de la demande: 12.02.2014
(73) Titulaire: SAGEMCOM BROADBAND SAS, 92500 Rueil-Malmaison (FR)
(72) Inventeur: LANDAIS, Thomas, 92500 Rueil Malmaison (FR)
(74) Mandataire: Camus, Olivier Jean-Claude
(86) Numéro de dépôt international: PCT/EP2012/055850
(87) Numéro de publication internationale: WO 2012/136596

(56) Documents cités:
- EP-A1- 2 169 956
- US-A1- 2003 105 890
- US-A1- 2005 071 872

## Description

### DOMAINE TECHNIQUE DE L'INVENTION

La présente invention concerne un procédé de détermination d'un comportement inhabituel d'un appareil électronique, à partir de bases de temps disponibles a sein de l'appareil électronique considéré ; elle se rapporte également à tout appareil électronique apte à mettre en oeuvre un tel procédé. Une telle détection d'usage inhabituel peut intervenir par exemple pour déterminer des profils d'utilisateur qui pourraient être soupçonnés d'une utilisation frauduleuse de leur appareil électronique.

Le domaine de l'invention est d'une façon générale celui des appareils électroniques pouvant être raccordés à différentes sources aptes à transmettre à l'appareil électronique considéré un flux d'informations, chaque source étant associée à une référence temporelle qui lui est propre. A titre d'exemples de tels appareils électroniques, on peut citer des récepteurs de radio numériques connectés au réseau numérique de radio diffusion et/ou connectés au réseau internet. On peut également citer des tablettes numériques, au moyen desquelles il est possible de se connecter au réseau Internet par exemple en vue de louer des films en Vidéo à la Demande (VOD), ce qui constitue une première source avec une première référence temporelle, et au moyen desquelles on peut raccorder des adaptateurs de télévision numérique, ce qui constitue une deuxième source avec une deuxième référence temporelle. On peut encore citer, à titre d'exemple, les décodeurs de télévision numérique, ou Set Top Box (STB) en langue anglaise.

L'invention sera plus particulièrement décrite dans le cadre des décodeurs de télévision numérique, sans que la portée de l'invention soit restreinte à cet exemple d'application. Les décodeurs de télévision numérique récents sont susceptibles de recevoir des flux de signaux depuis différentes sources (terrestre et/ou satellite et/ou câblé et/ou Internet...).

Dans le domaine de la télévision numérique, des décodeurs de télévision numérique sont utilisés, notamment afin d'accéder à un ensemble de chaînes de télévision qui sont transmises cryptées et qui sont décryptées au sein du décodeur. Les décodeurs de télévision sont des organes interfaces entre des systèmes de transmission de signaux de télévision, notamment de signaux de télévision numérique au format MPEG et DVB, et des moniteurs de visualisation. Les moyens de transmission qui transmettent les émissions de télévision à ces décodeurs/récepteurs sont soit des moyens de transmission aériens classiques, soit des câbles coaxiaux, voire optiques, soit des satellites de réémission qui desservent une région, soit encore le réseau Internet. Le décodeur comporte des moyens de réception pour recevoir les signaux émis et des moyens de formatage pour transformer les signaux reçus en des signaux applicables directement sur les organes de commande du dispositif de visualisation.

Le formatage se réalise en respectant pour chacune des images à représenter des tables de paramètres. On distingue différents types de tables : les tables SI (Information Système), les tables PSI (Informations Spécifiques de Programmes), les tables NIT (Tables d'Information de Réseau), les tables EIT (Tables d'Evénements), les tables PAT (Table des Programmes Associés), la table CAT (Table de Contrôle d'Accès) ou encore les tables PMT (Table des Composants des Programmes)...

### ARRIERE-PLAN TECHNOLOGIQUE DE L'INVENTION

Une fois les tables constituées, il est indispensable pour le bon fonctionnement du décodeur, que celui-ci acquière une horloge de référence interne. L'acquisition est réalisée en récupérant l'information d'horloge le plus souvent via la source constituée par le flux de signaux reçu par le décodeur. Une fois l'information d'horloge reçue, elle constitue l'horloge de référence interne du décodeur, en étant avantageusement mise à jour ponctuellement par la même source que celle qui avait permis son acquisition initiale.

Une telle horloge de référence est utilisée en permanence dans les opérations de décodage, mais aussi dans des opérations annexes comme par exemple l'achat de vidéo à la demande (VOD). Elle permet notamment de limiter l'utilisation de la VOD, une fois que celle-ci est achetée, à une certaine durée limitée dans le temps, le plus souvent en comparant l'horloge de référence interne du décodeur à une information d'horloge qui est disponible sur un serveur distant. Certains fraudeurs parviennent cependant à intervenir sur l'horloge de référence interne du décodeur pour contourner la sécurité des VOD consistant à limiter le visionnage de celles-ci pendant une durée limitée. Il apparaît donc dans ce cas précis de modifier le principe de l'horloge de référence interne tel qu'il existe jusqu'à présent.

D'une manière plus générale, pour diverses applications des décodeurs de télévision numérique, et notamment pour des applications de contrôle du bon fonctionnement desdits décodeurs, il apparaît désormais insuffisant, l'information d'horloge de référence étant devenue fondamentale dans le fonctionnement du décodeur de télévision numérique, de se limiter au fonctionnement habituel jusqu'à présent ; celui-ci consistait à mémoriser une unique information d'horloge acquise via une unique source pour déterminer ladite information d'horloge de référence interne du décodeur.

Une telle synchronisation est par exemple divulguée dans un contexte un peu différent dans le document US20050071872.

### DESCRIPTION GENERALE DE L'INVENTION

L'objet de l'invention offre une solution aux problèmes qui viennent d'être exposés en proposant un procédé de génération d'une base de temps au sein d'un décodeur de télévision numérique dans lequel une pluralité d'informations d'horloge provenant de sources différentes sont utilisées afin de constituer ladite base de temps considérée. Ainsi, chaque décodeur de télévision numérique est susceptible de posséder un comportement temporel qui lui est propre, comportement défini par le distributeur du décodeur et/ou par différentes informations d'horloge qui sont disponibles via différentes sources. Avantageusement, la présente invention propose de récupérer des informations d'horloge provenant d'au moins une première source et d'au moins une deuxième source, et de générer à partir de ces différentes informations d'horloge une plage de cohérence temporelle. Avantageusement encore, les informations d'horloge récupérées par le décodeur de télévision numérique sont hiérarchisées notamment selon un ordre préalablement établi, afin par exemple de définir une horloge de référence interne du décodeur de télévision numérique considéré.

L'invention concerne donc essentiellement un procédé tel que décrit dans les revendications 1 à 6.

La présente invention se rapporte également à un appareil électronique, notamment un décodeur de télévision numérique, apte à mettre en oeuvre le procédé selon l'invention, et tel que décrit dans les revendications 7 et 8.

### BREVE DESCRIPTION DES FIGURES

Les figures ne sont présentées qu'à titre indicatif et nullement limitatif de l'invention. Les figures montrent :
- à la figure 1, une représentation schématique du traitement selon l'invention, au sein d'un décodeur de télévision numérique, de différentes sources de temps disponibles ;
- à la figure 2, un organigramme illustrant un exemple de mise en oeuvre du procédé de génération d'une base de temps au sein d'un décodeur de télévision numérique ;
- à la figure 3, une représentation schématique d'une courbe, formant une plage de cohérence temporelle, illustrant la prise en compte de différentes sources de temps au sein d'un décodeur de télévision numérique ;
- à la figure 4, une représentation schématique d'une information temporelle discordante en comparaison avec la plage de cohérence de la figure 3 ;
- à la figure 5, un diagramme illustrant un exemple d'application de la mise en oeuvre du procédé selon l'invention de génération d'une base de temps.

### DESCRIPTION DETAILLEE D'AU MOINS UN MODE DE REALISATION DE L'INVENTION

Sauf précision contraire, un même élément apparaissant sur des figures différentes présente une référence unique.

L'invention est plus particulièrement décrite dans le cadre des décodeurs de télévision numérique, sans que la portée de l'invention soit restreinte à cet exemple d'application.

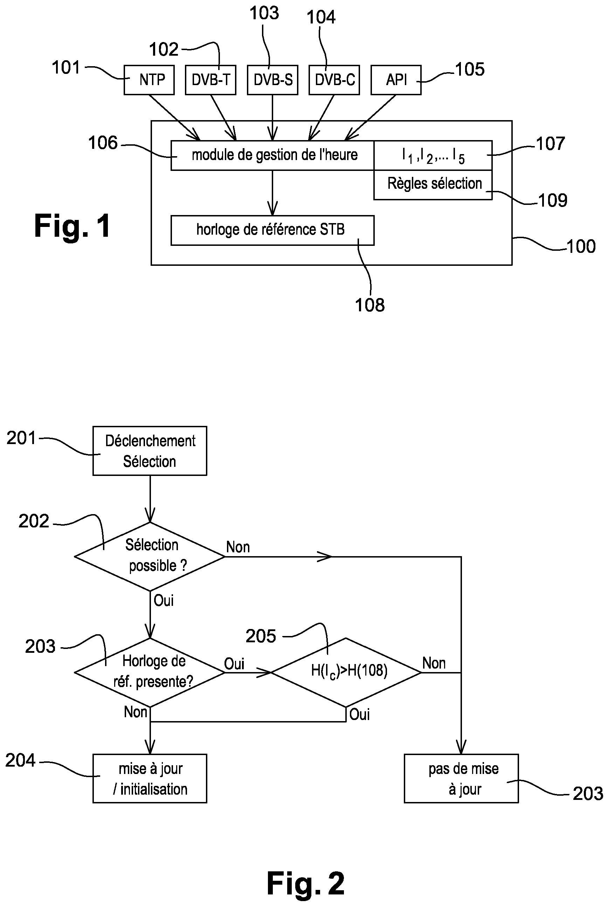

La figure 1 représente un décodeur de télévision numérique 100 apte à mettre en oeuvre le procédé selon l'invention. Le décodeur 100, pour pouvoir mettre en oeuvre le procédé selon l'invention, est apte à recevoir un flux de signaux depuis au moins une première source de signaux et d'au moins une deuxième source de signaux. Ainsi, dans l'exemple représenté, le décodeur 100 est apte à recevoir des signaux depuis :
- une première source 101 constituée par un serveur distant; on parle alors de source NTP (pour Network Time Protocol en langue anglaise) ; la source NTP peut être, de manière classique, de type sécurisée ou basique ;
- une deuxième source 102 constituée par des moyens d'émission terrestre, connus sous l'acronyme DVB-T (Pour Digital Video Broadcasting Terrestrial en langue anglaise) ;
- une troisième source 103 constituée par des moyens d'émission satellite, connus sous l'acronyme DVB-S (Pour Digital Video Broadcasting Satellite en langue anglaise) ;
- une quatrième source 104 constituée par des moyens d'émission câblés, connus sous l'acronyme DVB-C (Pour Digital Video Broadcasting Cable en langue anglaise) ;
- une cinquième source 105 constituée par des moyens d'émission utilisant le réseau Internet et des portails utilisant des API.

Dans la pratique, tout décodeur apte à recevoir une information d'horloge depuis au moins une première source et une deuxième source distinctes, choisies parmi les sources qui viennent d'être citées ou d'autres, est apte à mettre en oeuvre le procédé selon l'invention.

Dans le décodeur 100, pour la mise en oeuvre du procédé selon l'invention, on propose l'utilisation d'un module de gestion de l'horloge interne 106. Le module 106 est apte à identifier dans les signaux reçus par les différentes sources 101 à 105 des informations d'horloge, ou informations temporelles, Ii - i correspondant à un indice identifiant la source de l'information d'horloge - spécifiques à chacune des sources considérées. En effet, dans la pratique, un écart pouvant aller jusqu'à quelques minutes peut être observé entre les différentes informations d'horloge reçues depuis des sources différentes. Selon l'invention, le module 106 prévoir la mémorisation de l'ensemble de ces informations d'horloge dans un module de mémoire de données 107. L'ensemble des informations d'horloge li ainsi mémorisées constitue une base de temps du décodeur 100.

Avantageusement, une fois qu'une information temporelle Ii est mémorisée dans le module de mémoire de données 107, elle peut être remplacée par une information temporelle suivante reçue depuis la même source que la source ayant fournie ladite information considérée.

Selon l'invention, le décodeur sélectionne une horloge de référence interne 108 parmi les informations temporelles mémorisées Ii. L'horloge de référence interne est utilisée pour toutes les opérations classiques nécessitant l'utilisation d'une information temporelle au sein du décodeur. L'invention propose l'avantage de laisser une liberté au distributeur du décodeur de définir quelle information temporelle mémorisée sera utilisée comme horloge de référence interne. Le choix de l'horloge de référence interne parmi les différentes informations d'horloge mémorisées est réalisée selon des règles de fonctionnement préalablement mémorisées dans une mémoire de programmes 109 du module de gestion de l'heure 106.

Ainsi, dans un exemple avantageux, on peut définir un niveau de hiérarchie entre les différentes informations temporelles Ii mémorisées dans la mémoire de données 107, le niveau de hiérarchie étant par exemple associé à la source fournissant l'information temporelle considérée.

La sélection de l'horloge de référence interne 108 est alors effectuée de la manière décrite en référence avec l'organigramme de la figure 2.

Dans cet exemple de fonctionnement, on procède, dans une première étape 201, au déclenchement de la sélection d'une horloge de référence interne 201.

Dans une étape de décision suivante 202, on vérifie que le décodeur 100 autorise bien, à l'instant considéré, une telle opération de sélection d'horloge interne de référence. A cet effet, on prévoit par exemple de vérifier la disponibilité d'une des informations temporelles Ii dans la mémoire 107, qui est alors une information temporelle candidate Ic, et éventuellement de vérifier la valeur d'un paramètre mémorisé au sein du décodeur, paramètre dont la valeur peut évoluer par l'envoi, via les flux de signaux habituels, d'une nouvelle valeur pour le paramètre considéré.

Si le décodeur 100 n'autorise pas l'opération de sélection d'horloge interne de référence, ou si aucune information d'horloge candidate Ic n'est disponible dans la mémoire 107, alors l'opération de sélection de ladite horloge interne de référence est stoppée dans une étape 203, et aucune nouvelle horloge de référence interne 108 n'est mémorisée.

A l'inverse, si l'opération de sélection d'horloge interne de référence est possible, on procède, dans une étape de décision suivante 204, à une vérification consistant à déterminer si une horloge de référence interne 108 est déjà mémorisée au sein du décodeur 100. Dans la négative, on procède, dans une étape suivante 204, à la mise à jour de l'horloge de référence interne 108 au moyen de l'information temporelle mémorisée Ii déterminée comme disponible dans l'étape 202, en initialisant ladite horloge de référence interne au moyen de la valeur associée à l'information temporelle mémorisée Ii déterminée comme disponible dans l'étape 202.

Si une horloge de référence interne 108 est effectivement déjà mémorisée au sein du décodeur 100, après avoir été préalablement sélectionnée parmi les informations temporelles disponibles dans la mémoire 107, on détermine dans une étape de décision 205, si l'information temporelle candidate Ic doit remplacer ou non l'horloge de référence interne 108. A cet effet, on prévoit avantageusement dans l'invention d'associer chaque information temporelle Ii, et donc l'information temporelle candidate Ic et l'horloge de référence 108, à une valeur H qui est propre à chaque source fournissant les informations temporelles de référence.

Ainsi, on peut définir comme règle de sélection mémorisée dans la mémoire 109, par exemple, que les informations temporelles provenant d'un flux satellite ont un niveau hiérarchique plus élevé que les informations temporelles provenant d'un flux de signaux transmis par câble. La hiérarchie des sources susceptibles de fournir une information temporelle est déterminée par le distributeur du décodeur et est mémorisée dans les règles de sélection de la mémoire 109 ; cette hiérarchie peut avantageusement être modifiée au cours de la vie du décodeur.

On vérifie ainsi dans l'étape 205 si le niveau de hiérarchie H(Ic) de l'information temporelle candidate est supérieur au niveau de hiérarchie H(108) de l'horloge de référence interne 108 du décodeur 100. Dans la négative, on maintient l'horloge de référence interne sans lui attribuer la valeur de l'information temporelle Ic en observant l'étape 203. Dans l'affirmative, on procède à la mise à jour de l'horloge interne de référence 108 en utilisant la valeur de l'information temporelle candidate Ic en observant l'étape 204.

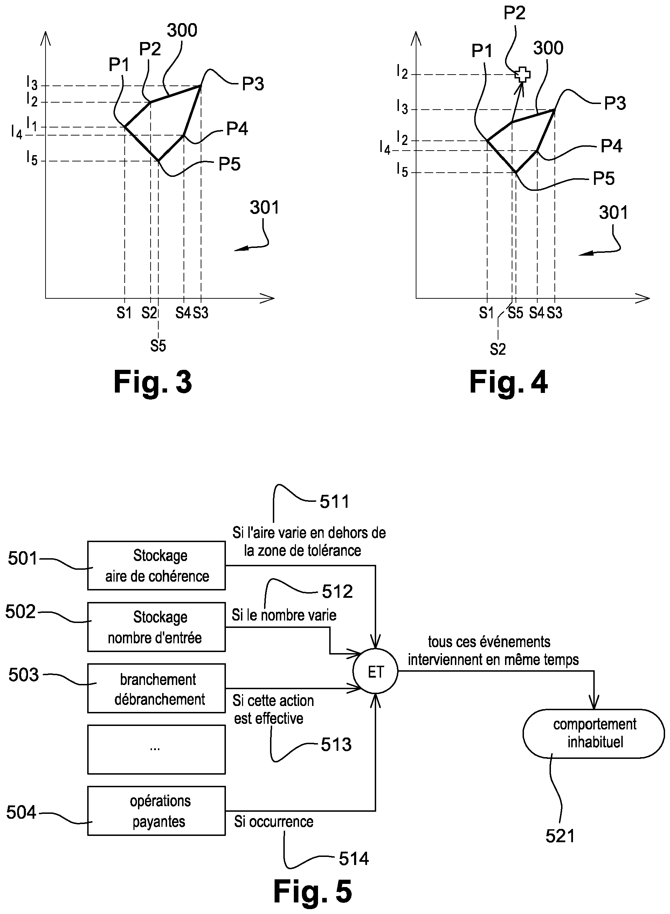

Dans l'invention, en mémorisant différentes informations temporelles Ii dans la mémoire 107 du module de gestion de l'heure 106, on dispose, au sein du décodeur 100, d'une base de temps. Cette base de temps permet de définir une plage de cohérence temporelle 300 qui est illustrée à la figure 3.

Sur cette figure, on a positionné cinq points P1, P2, P3, P4 et P5 sur un graphique dont l'axe des abscisses correspond à la source fournissant une des informations temporelles Ii, et dont l'axe des ordonnées correspond à la valeur des informations temporelles Ii. Ainsi, dans l'exemple représenté, les points P1 à P5 correspondent respectivement aux informations temporelles I1 à I5, et proviennent de cinq sources distinctes, référencées respectivement S1 à S5.

La plage de cohérence temporelle 300 est constituée par un ensemble de valeurs temporelles qui ne sont pas discordantes par rapport aux informations temporelles Ii mémorisées. On définit ici qu'une information temporelle est non discordante par rapport aux informations temporelles Ii mémorisées si le positionnement de ladite information temporelle non discordante, en fonction de la source à laquelle elle est associée, dans le graphique 301 se situe dans le polygone, ou à proximité immédiate du polygone, formé par les sommets des points P1 à P5. On dit qu'un positionnement Pi de ladite information temporelle non discordante Ii, en fonction de la source à laquelle elle est associée, dans le graphique 301 se situe à proximité immédiate du polygone si l'information temporelle Ii considérée n'a pas subi de variation supérieure à quelques minutes, typiquement trois minutes par rapport à sa valeur précédemment mémorisée. Ainsi, à la figure 4, on considère que le point P2, qui a subi un déplacement significatif par rapport à son positionnement habituel représenté à la figure 3, est révélateur d'une information temporelle I2 discordante.

La figure 5 illustre un exemple d'utilisation des bases de temps générées par le procédé selon l'invention, en utilisant les plages de cohérence temporelles qui en découlent.

Ainsi, à la figure 5, on a représenté un ensemble d'événements susceptibles d'être observés au sein du décodeur 100 et qui sont susceptibles de révéler un comportement inhabituel du décodeur 100.

On a ainsi tout d'abord mémorisé un ensemble de données relatives au décodeur 100.

Une première donnée 501 est constituée par la plage de cohérence 300 telle que définie précédemment. Un événement 511 susceptible d'être observé, associé à cette donnée, réside dans la présence d'une information temporelle discordante telle que précédemment définie.

Une deuxième donnée 502 est constituée par la mémorisation du nombre d'entrées actives sur le décodeur de télévision 100, c'est-à-dire le nombre de sources disponibles pour fournir des informations au décodeur sous la forme d'un flux de signaux. Un événement 512 susceptible d'être observé, associé à cette donnée, réside dans une variation du nombre d'entrées actives disponibles.

Une troisième donnée 503 est constituée par la mémorisation du nombre d'opérations de branchement et/ou de débranchement d'un câble relié au décodeur 100, qu'il s'agisse d'un câble d'alimentation, et/ou d'un câble vidéo, et/ou d'un câble Ethernet, et/ou de tout câble susceptible d'être relié au décodeur 100. Un événement 513 susceptible d'être observé, associé à cette donnée, réside dans l'observation d'une opération de branchement et/ou de débranchement d'au moins un des câbles.

Une quatrième donnée 504 est constituée par la présence d'opérations payantes effectuées au sein du décodeur 100, par exemple l'achat de VOD. Un événement 514 susceptible d'être observé, associé à cette donnée, réside dans l'observation effective d'opérations payantes réalisées au moyen du décodeur.

Selon l'invention, si l'événement 511 est observé ainsi qu'au moins un des autres événements, ou dans certains exemples de mise en oeuvre l'ensemble de ces événements, mentionnés est observé dans un intervalle de temps limité voisin - c'est-à-dire dans une plage de temps de quelques minutes, typiquement une vingtaine de minutes - d'une opération nécessitant l'utilisation de l'horloge de référence interne 108 (par l'exemple l'achat d'une VOD), alors on enregistre un comportement inhabituel 521 du décodeur 100.

Un tel comportement inhabituel peut en outre constituer un indice de présomption quant à une utilisation frauduleuse du décodeur, un soupçon quant à une intervention de l'utilisateur sur l'horloge de référence interne du décodeur étant alors présent.

## Revendications

1. Procédé de détermination d'un profil utilisateur d'un appareil électronique, ledit appareil électronique réalisant une opération nécessitant l'utilisation d'une information d'horloge de référence interne (108) dudit appareil électronique (100), **caractérisé en ce qu'**il comportant les différentes étapes consistant à :
- comparer l'information d'horloge de référence interne (108) avec une plage de cohérence temporelle (300) de l'appareil électronique (100), ladite plage de cohérence temporelle étant déterminée à partir de différentes informations temporelles reçues par l'appareil électronique et mémorisées (li) au sein de l'appareil électronique;
- en cas de discordance entre l'information d'horloge de référence interne et la plage de cohérence, mémoriser une information si au moins une des conditions suivantes est réalisée dans un intervalle de temps limité voisin de la réalisation de l'opération nécessitant l'utilisation de l'horloge interne de référence :
- un nombre de sources d'informations, depuis lesquelles les informations temporelles sont acquises, accessibles par l'appareil électronique a varié ;
- une opération de branchement et/ou de débranchement d'un câble relié à l'appareil électronique a été observée ;
- une opération d'achat d'un contenu audio et/ou vidéo a été réalisée par l'intermédiaire de l'appareil électronique.

2. Procédé selon la revendication précédente **caractérisé en ce qu'**il comporte les différentes étapes consistant à :
- pour déterminer la plage de cohérence temporelle,
- acquérir depuis une première source d'information (101) une première information temporelle (I1) apte à être utilisée comme horloge interne dudit appareil électronique (100) ;
- acquérir depuis au moins une source d'information suivante (102 ; 103 ; 104 ; 105) au moins une information temporelle suivante (I2 ; I3 ; I4 ; I5), chaque information temporelle suivante étant apte à être utilisée comme horloge interne dudit appareil électronique (100) ;
- mémoriser dans une mémoire (107) de l'appareil électronique (100) la première information temporelle (I1) et chaque information temporelle suivante (I2 ; I3 ; I4 ; I5), l'ensemble des informations temporelles mémorisées constituant une base de temps de l'appareil électronique (100) ;
- sélectionner parmi les différentes informations temporelles mémorisées une horloge de référence interne (108) de l'appareil électronique (100).

3. Procédé selon la revendication précédente **caractérisé en ce que** l'étape de sélection de l'horloge de référence interne est réalisée en associant un niveau de hiérarchie (Hi) à chaque information temporelle (li) mémorisée, l'horloge de référence interne (108) étant constituée par l'information temporelle mémorisée associée au niveau de hiérarchie le plus élevé.

4. Procédé selon la revendication précédente **caractérisé en ce que** le niveau de hiérarchie est attribué, pour chaque information temporelle mémorisée, en fonction de la source d'informations (101 ; 102 ; 103 ; 104 ; 105) d'où provient l'information temporelle considérée.

5. Procédé selon l'une des revendications 3 ou 4 **caractérisé en ce que** des règles d'association des niveaux de hiérarchie sont mémorisés dans une mémoire (109) de l'appareil électronique (100) préalablement à l'acquisition des informations temporelles (li).

6. Procédé selon l'une quelconque des revendications 2 à 5 **caractérisé en ce qu'**il comporte l'étape supplémentaire consistant à remplacer (204) une information temporelle mémorisée par une information temporelle plus récente provenant de la même source d'information que ladite information temporelle mémorisée.

7. Appareil électronique apte à mettre en oeuvre le procédé selon l'une quelconque des revendications précédentes.

8. Décodeur de télévision numérique contenant l'appareil électronique de la revendication 7.

## Patentansprüche

1. Bestimmungsverfahren eines Nutzerprofils eines elektronischen Geräts, wobei das genannte elektronische Gerät eine Operation ausführt, die die Verwendung einer Information einer internen Referenzuhr (108) des genannten elektronischen Geräts (100) erfordert, **dadurch gekennzeichnet, dass** sie die unterschiedlichen Schritte umfasst, bestehend aus:
- Vergleichen der Information einer internen Referenzuhr (108) mit einem zeitlichen Kohärenzbereich (300) des elektronischen Geräts (100), wobei der genannte zeitliche Kohärenzbereich ausgehend von unterschiedlichen zeitlichen Informationen bestimmt ist, die vom elektronischen Gerät empfangen und innerhalb des elektronischen Geräts gespeichert sind (Ii);
- bei einer Unstimmigkeit zwischen der Information der internen Referenzuhr und dem Kohärenzbereich Speichern einer Information, wenn eine der folgenden Bedingungen in einem begrenzten Zeitintervall realisiert ist, das der Realisierung der Operation nahe ist, die die Verwendung der internen Referenzuhr erfordert:
- eine Anzahl von Informationsquellen, von denen die zeitlichen Informationen erworben sind, von dem elektronischen Gerät zugänglich sind, verändert wurde;
- eine Anschlussoperation und / oder Abschaltoperation eines mit dem elektronischen Gerät verbundenen Kabels festgestellt wurde;
- eine Kaufoperation eines Audio- und / oder Videoinhaltes mittels des elektronischen Geräts realisiert wurde.

2. Verfahren gemäß dem voranstehenden Anspruch, **dadurch gekennzeichnet, dass** es die unterschiedlichen Schritte umfasst, bestehend aus:
- zum Bestimmen des zeitlichen Kohärenzbereichs,
Erwerben einer ersten zeitlichen Information (I1), die geeignet ist, als interne Uhr des genannten elektronischen Geräts (100) verwendet zu werden, von einer ersten Informationsquelle (101);
- Erwerben wenigstens einer nachfolgenden zeitlichen Information (I1; I3; I4; I5) von wenigstens einer nachfolgenden Informationsquelle (102; 103; 104; 105), wobei jede folgende zeitliche Information geeignet ist, als interne Uhr des genannten elektronischen Geräts (100) verwendet zu werden;
- Speichern der ersten zeitlichen Information (I1) und jeder nachfolgenden zeitlichen Information (I2; I3; I4; I5) in einem Speicher (107) des elektronischen Geräts (100), wobei alle gespeicherten zeitlichen Informationen eine Zeitbasis des elektronischen Geräts (100) bilden;
- Auswählen einer internen Referenzuhr (108) des elektronischen Geräts (100) aus den gespeicherten unterschiedlichen zeitlichen Informationen.

3. Verfahren gemäß dem voranstehenden Anspruch, **dadurch gekennzeichnet, dass** der Auswahlschritt der internen Referenzuhr per Zuordnen eines hierarchischen Niveaus (Hi) jeder gespeicherten zeitlichen Information (Ii) realisiert ist, wobei die interne Referenzuhr (108) durch die gespeicherte zeitliche Information gebildet ist, die dem höchsten hierarchischen Niveau zugeordnet ist.

4. Verfahren gemäß dem voranstehenden Anspruch, **dadurch gekennzeichnet, dass** das hierarchische Niveau für jede gespeicherte zeitliche Information in Abhängigkeit von der Informationsquelle (101; 102; 103; 104; 105), von der die betrachtete zeitliche Information stammt, zugeordnet ist.

5. Verfahren gemäß einem der Ansprüche 3 oder 4, **dadurch gekennzeichnet, dass** Zuordnungsregeln der hierarchischen Niveaus in einem Speicher (109) des elektronischen Geräts (100) vor dem Erwerb der zeitlichen Informationen (Ii) gespeichert sind.

6. Verfahren gemäß einem der Ansprüche 2 bis 5, **dadurch gekennzeichnet, dass** es den zusätzlichen Schritt umfasst, der im Ersetzen (204) einer gespeicherten zeitlichen Information durch eine aktuellere zeitliche Information besteht, die aus derselben Informationsquelle stammt wie die genannte gespeicherte zeitliche Information.

7. Elektronisches Gerät, das zum Umsetzen des Verfahrens gemäß irgendeinem der voranstehenden Ansprüche geeignet ist.

8. Digitaler Fernseh-Dekodierer, der ein elektronisches Gerät des Anspruchs 7 enthält.

## Claims

1. A method for determining a user profile of an electronic apparatus, said electronic apparatus performing an operation requiring the use of an internal reference clock information (108) of said electronic apparatus (100), **characterised in that** it includes the different steps of:
- comparing the internal reference clock information (108) with a temporal coherence range (300) of the electronic apparatus (100), said temporal coherence range being determined from different temporal information received by the electronic apparatus and stored (li) within the electronic apparatus;
- in case of mismatch between the internal reference clock information and the coherence range, storing a of information if at least one of the following conditions is performed in a limited time interval next to performing the operation requiring the use of the reference internal clock;
- a number of information sources, from which the temporal information is acquired, accessible by the electronic apparatus has varied;
- an operation of plugging and/or unplugging a cable connected to the electronic apparatus has been observed;
- an operation of buying an audio and/or video content has been performed through the electronic apparatus.

2. The method according to the preceding claim, **characterised in that** it includes the different steps of:
- for determining the temporal coherence range,
- acquiring from a first information source (101) a first temporal of information (I1) able to be used as an internal clock of said electronic apparatus (100);
- acquiring from at least one following information source (102; 103; 104; 105) at least one next temporal of information (I2; I3; I4; I5), each following temporal information being able to be used as an internal clock of said electronic apparatus (100);
- storing in a memory (107) of the electronic apparatus (100) the first temporal information (I1) and each following temporal information (I2; I3; I4; I5), all the stored temporal information making up a time base for the electronic apparatus (100);
- selecting from the different stored temporal information, an internal reference clock (108) of the electronic apparatus (100).

3. The method according to the preceding claim, **characterised in that** the step of selecting the internal reference clock is performed by associating a hierarchy level (Hi) with each stored temporal information (li), the internal reference clock (108) consisting of the stored temporal information associated with the highest hierarchy level.

4. The method according to the preceding claim, **characterised in that** the hierarchy level is assigned, for each stored temporal information, as a function of the information source (101; 102; 103; 104; 105) from which the considered temporal information comes from.

5. The method according to one of claims 3 or 4, **characterised in that** hierarchy level association rules are stored in a memory (109) of the electronic apparatus (100) prior to acquiring the temporal information (li).

6. The method according to any one of claims 2 to 5, **characterised in that** it includes the further step of replacing (204) a stored temporal information with a more recent temporal information from the same information source as said stored temporal information.

7. An electronic apparatus able to implement the method according to any of the preceding claims.

8. A digital set top box containing the electronic apparatus of claim 7.
